# EUROPEAN PATENT SPECIFICATION

(11) **EP 2 851 209 B1**
(45) Date of publication and mention of the grant of the patent: **02.03.2016**
(21) Application number: 14173143.0
(22) Date of filing: 19.06.2014
(51) Int. Cl.: B60B 1/02

(54) **Spoke wheel**
Speichenrad
Roue à rayons

(30) Priority: 24.09.2013 JP 2013197377
(43) Date of publication of application: 25.03.2015
(73) Proprietor: Honda Motor Co., Ltd., Tokyo 107-8556 (JP)
(72) Inventor: Yasuhara, Mafumi, Wako-shi, Saitama 351-0193 (JP); Imada, Mitsunobu, Wako-shi, Saitama 351-0193 (JP); Honda, Naoyoshi, Wako-shi, Saitama 351-0193 (JP)
(74) Representative: Stevens, Jason Paul

(56) References cited:
- EP-A2- 0 039 021
- JP-A- S6 025 801
- US-A1- 2006 022 515

## Description

The present invention relates to a spoke wheel, and in particular to the way of attaching the spokes.

As vehicle wheels (especially motorcycle wheels), a cast wheel and a spoked wheel (spoke wheel) are mainly used. Various structures for a spoke wheel have been proposed (for example, see Fig. 4 in Japanese Laid-Open Patent Publication No. 2005-349857).

As shown in Fig. 4 in Japanese Laid-Open Patent Publication No. 2005-349857, a wheel (50) comprises a hub (51), a rim (54), and thirty-two spokes (52) connecting the hub (51) and the rim (54) (the numerals in parentheses correspond to the reference numerals used in Japanese Laid-Open Patent Publication No. 2005-349857).

Since the spokes (52) cross over each other in a side view of the vehicle, it is necessary to take measures to ensure that the spokes (52) do not interfere with each other. One of the measures is to use spokes having different elbow lengths. Bending stress is generated at the base of the elbow, and the bending stress becomes larger with greater elbow length. For a spoke with a long elbow, it is necessary to thicken the elbow to decrease the bending stress, or to change the material to a stronger material.

However, increasing the thickness of the spokes leads to an increase in the weight of the spoke wheel. In addition, stronger materials are expensive, which leads to an increase in the cost of the spoke wheel.

At least in its preferred aspects, the present invention aims to provide a spoke wheel which can use low cost spokes without changing the outer diameter of the spoke.

According to a first aspect of the invention, there is provided a spoke wheel comprising: a hub supported on a laterally extending wheel shaft and on which a driving force and a braking force may be applied, a rim on which a tire may be fitted, and a plurality of spokes connecting the rim to said hub, characterized in that, said spokes are of at least two kinds, including: a short elbow spoke including: a straight line portion; a short elbow formed by bending the one end of the straight line portion; and a head formed on the tip of the short elbow; and a long elbow spoke including: a straight line portion; a long elbow formed by bending the one end of the straight line portion, which is longer than said short elbow in order to avoid interfering with the short elbow spoke; and a head formed on the tip of the long elbow; spoke fastening walls with a plurality of spoke holes are provided on said hub for engaging said short elbow and said long elbow; said short elbow and said long elbow are engaged with adjacent said spoke holes in a side view of the vehicle, simultaneously, said short elbow spoke and said long elbow spoke being arranged so as to cross in a side view of the vehicle, and said short elbow spoke and said long elbow spoke are respectively disposed such that said short elbow spoke receives the braking force and said long elbow spoke receives the driving force.

The short elbow spoke and the long elbow spoke are respectively disposed such that the short elbow spoke receives force during braking and the long elbow spoke receives force during driving.

It is recommended to accelerate the vehicle moderately when starting. However, it is sometimes necessary to brake suddenly, causing sudden deceleration, and so braking force can be higher than driving force.

The short elbow spoke can bear more tension than the long elbow spoke can, as the elbow length is shorter. Thus, the short elbow spoke, which has a greater strength margin, receives the braking force, and the long elbow spoke receives the driving force.

The long elbow spoke does not need to be as string, and so there is no need to thicken the long elbow spoke and/or to use expensive material. It is thus possible to provide a spoke wheel which can use lower cost spokes without changing the outer diameter of the spokes.

Preferably, said hub has a left spoke fastening wall and a right spoke fastening wall which are laterally spaced apart, said rim has a left spoke connecting hole and a right spoke connecting hole which are laterally spaced apart, said spokes extending from said left spoke fastening wall are engaged with said left spoke connecting hole, and said spokes extending from said right spoke fastening wall are engaged with said right spoke connecting hole.

With this arrangement, the balance between the right and left can be easily secured.

In a further preferred form, a set composed of four spokes includes two said short elbow spokes and two said long elbow spokes, a plurality of said sets are disposed between said hub and said rim in the circumferential direction, one of said two short elbow spokes and one of said two long elbow spokes are fastened to said left spoke fastening wall, and the other of said two short elbow spokes and the other of said two long elbow spokes are fastened to said right spoke fastening wall.

Providing a set comprising four spokes makes it easier to prepare the spokes and to attach the spokes to the hub and the rim.

In a further preferred form, said rim has a front side left spoke connecting hole, a front side right spoke connecting hole, a rear side left spoke connecting hole, a rear side right spoke connecting hole in this order in the direction of rotation in a side view of the vehicle, a front side left spoke hole and a rear side left spoke hole are provided in this order in the direction of rotation on said left spoke fastening wall, a front side right spoke hole and a rear side right spoke hole are provided in this order in the direction of rotation on said right spoke fastening wall, and said front side right spoke hole is shifted by a half pitch so as to be located midway between said front side left spoke hole and said rear side left spoke hole, the one end of one of said two long elbow spokes is engaged with said front side left spoke hole, the other end of the one of said two long elbow spokes is connected to said rear side left spoke connecting hole, the one end of the other of said two long elbow spokes is engaged with said front side right spoke hole, the other end of the other of said two long elbow spokes is connected to said rear side right spoke connecting hole, the one end of one of said two short elbow spokes is engaged with said rear side left spoke hole, the other end of the one of said short elbow spokes is connected to said front side left spoke connecting hole, and the one end of the other of said two short elbow spokes is engaged with said rear side right spoke hole, the other end of the other of said two short elbow spokes is connected to said front side right spoke connecting hole.

The front side left spoke hole and the rear side left spoke hole are provided along the direction of rotation on the left spoke fastening wall, the front side right spoke hole and the rear side right spoke hole are provided along the direction of rotation on the right spoke fastening wall, and the front side right spoke hole is shifted by a half pitch so as to be located centrally between the front side left spoke hole and the rear side left spoke hole. The front side right spoke hole, the rear side right spoke hole, the front side left spoke hole, and the rear side left spoke hole are disposed close to each other, in a configuration shifted by a half pitch. Accordingly, the spokes can be densely disposed on the hub. Moreover, the balance between the right and left can be secured.

Preferably, the straight line portion of said short elbow spoke and the straight line portion of said long elbow spoke have the same cross-sectional area.

The spokes can be formed by cutting a wire rod, bending, squashing, and cutting threads, using dies for bending, squashing, and thread-cutting. If the short elbow spoke and the long elbow spoke have the same cross-sectional area, then the dies are sharable for the short elbow spoke and for the long elbow spoke, and manufacturing cost can be reduced. Moreover, due to the same cross-sectional areas, balance can be easily achieved.

Preferably, said short elbow spoke and said long elbow spoke are made of the same material.

If the material is same, the procurement of the material (the wire rod) is easily available. Further, if the material is the same and the cross-sectional areas are the same, only a single kind of wire rod needs to be prepared to produce the short elbow spoke and the long elbow spoke. The procurement cost of the material can be reduced.

A preferred embodiment of the invention will now be described by way of example only and with reference to the accompanying Figures, in which:
Fig. 1 is a side view of the spoke wheel according to the preferred embodiment of the present invention;
Fig. 2 is a front view of the spoke wheel;
Fig. 3 is a view of the short elbow spoke;
Fig. 4 is a view of the long elbow spoke;
Fig. 5 is a partially sectional view of the spoke wheel showing the mounting of the short elbow spokes;
Fig. 6 is a partially sectional view of the spoke wheel showing the mounting of the long elbow spokes;
Fig. 7 is a view explaining the mounting of the spokes on the left spoke fastening wall;
Fig. 8 is a view explaining the mounting of the spokes on the right spoke fastening wall;
Fig. 9 is a view showing a set of four spokes; and
Fig. 10 is an explanatory drawing showing forces acting on the spoke wheel.

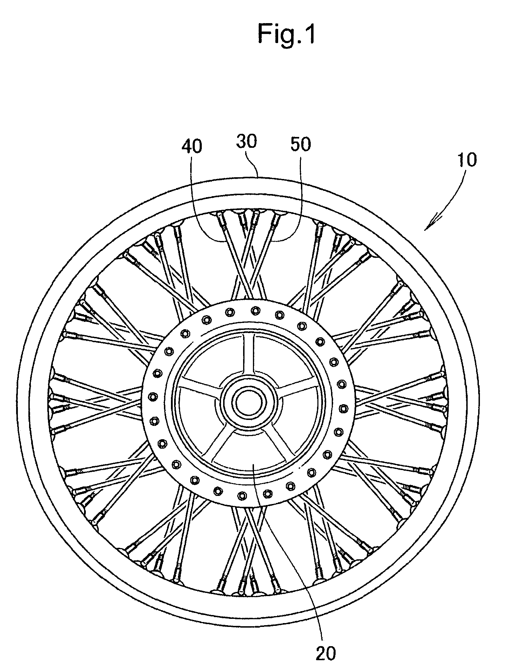

As shown in Fig. 1, a spoke wheel 10 comprises a hub 20 to which a driving force or a braking force is applied, a rim 30 on which a tire 31 is fitted, and a plurality of spokes (short elbow spokes 40 and long elbow spokes 50) connecting the rim 30 to the hub 20.

As is well known, the driving force from the driving source is transmitted to the hub 20 through a chain and a sprocket. The braking force is applied to the hub through the brake drum and the drake disc.

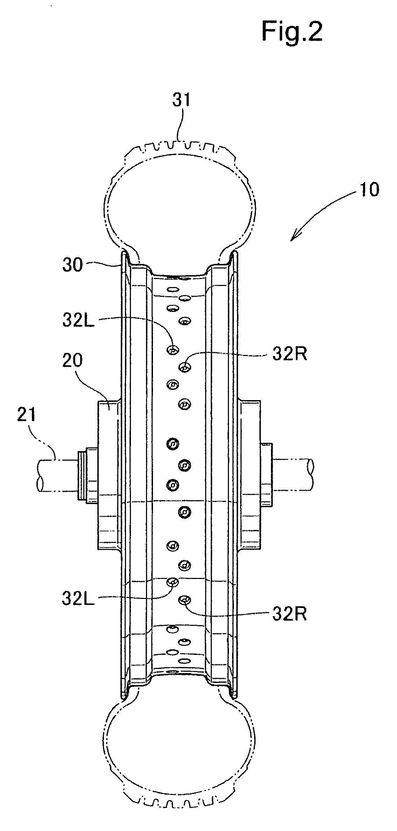

As shown in Fig. 2, the hub 20 is supported on a wheel shaft 21 extending in the lateral (width) direction of the vehicle. Hereinafter, the left side of the drawings should be considered as corresponding to the left side of the vehicle, and the right side of the drawings should be considered as corresponding to the side of the vehicle.

The tire 31, shown in a broken line, is attached to the rim 30. The rim 30 is provided with a series of left spoke connecting holes 32L (L here is a suffix indicating the left side) laterally spaced from a series of right spoke connecting holes 32R (R here is a suffix indicating the right side).

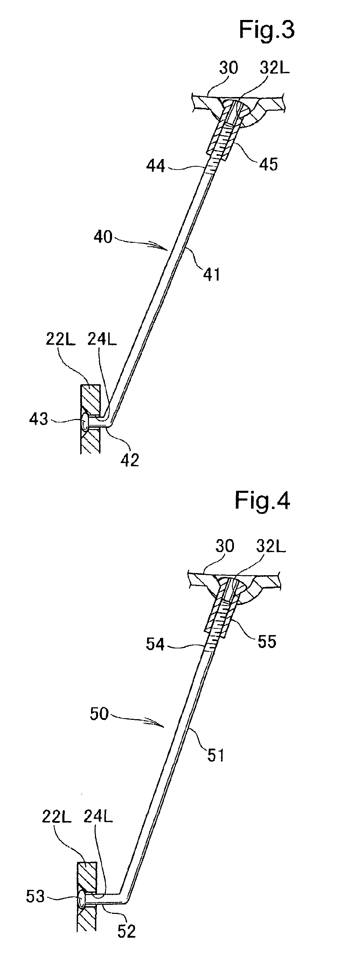

As shown in Fig. 3, a short elbow spoke 40 comprises a straight line portion 41 which is also referred to as a body, a short elbow 42 formed by bending one end of the straight line portion 41, and a head 43 formed on the tip of the short elbow 42.

An external thread 44 is formed on the other end of the straight line portion 41, and a nipple 45 is screwed onto the external thread 44.

As shown in Fig. 4, a long elbow spoke 50 comprises a straight line portion 51, a long elbow 52 (which is longer than the short elbow 42) formed by bending one end of the straight line portion 51, and a head 53 formed on the tip of the long elbow 52.

An external thread 54 is formed on the other end of the straight line portion 51, and a nipple 55 is screwed onto the external thread 54.

When the outer diameter of the straight line portion 51 and the outer diameter of the straight line portion 41 are the same, the nipple 55 and the nipple 45 are interchangeable, so that a single type of nipple can be used for both types of spoke.

The short elbow 42 and the long elbow 52 of the spokes 40, 50 are formed by cutting a wire rod, and bending the one end. The heads 43, 53 of the spokes are formed by squashing or otherwise deforming the end portions of the spokes.

If the straight line portion 41 and the straight line portion 51 have the same cross-sectional area, the dies used for bending and for squashing are interchangeable. Further, if the same material is used for both types of spoke (a hard drawn wire, a stainless steel wire, and the like), it only necessary to prepare one kind of wire rod.

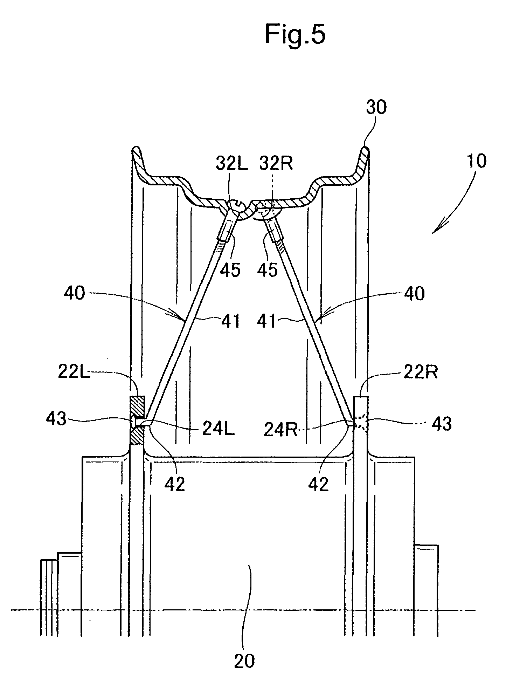

As shown in Fig. 5, the hub 20 has a left spoke fastening wall 22L and a right spoke fastening wall 22R. The left spoke hole 24L is provided on the left spoke fastening wall 22L, and the right spoke hole 24R is provided on the right spoke fastening wall 22R.

One short elbow spoke 40 is engaged with the left spoke hole 24L, so that the short elbow 42 passes through the left spoke hole 24L. The straight line portion of the short elbow spoke extends to the rim 30, and is engaged with the left spoke connecting hole 32L through the nipple 45. The tension of the short elbow spoke 40 can be adjusted by rotating the nipple 45.

The outer diameter of the head 43 is larger than the diameter of the left spoke hole 24L, and so the head functions as a stop.

Similarly, another short elbow spoke 40 is engaged with the right spoke hole 24R, so that the short elbow 42 passes through the right spoke hole 24R. The straight line portion of the short elbow spoke extends to the rim 30, and is engaged with the right spoke connecting hole 32R through the nipple 45.

The short elbow spokes 40, 40 are symmetrically disposed, which improves the balance between right and left.

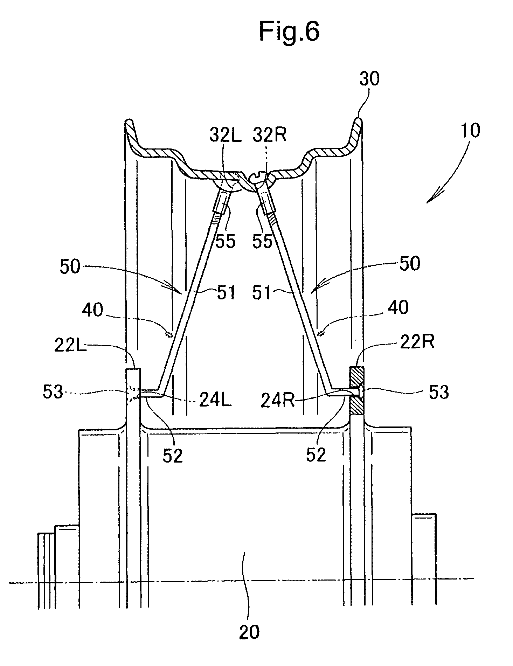

As shown in Fig. 6, one long elbow spoke 50 is engaged with the left spoke hole 24L, so that the long elbow 52 passes through the left spoke hole 24L. The straight line portion of the long elbow spoke extends to the rim 30, and is engaged with the left spoke connecting hole 32L through the nipple 55. The tension of the long elbow spoke 50 can be adjusted by rotating the nipple 55. As the long elbow spoke 50 is spaced apart from the short elbow spoke 40, there is no risk of the spokes 40, 50 interfering with each other.

Similarly, a second long elbow spoke 50 is engaged with the right spoke hole 24R, so that the long elbow 52 passes through the right spoke hole 24R. The straight line portion of the long elbow spoke extends to the rim 30, and is engaged with the right spoke connecting hole 32R through the nipple 55.

The long elbow spokes 50, 50 are symmetrically disposed, which improves the balance between right and the left.

Next, the way in which the two short elbow spokes 40, 40 and the two long elbow pokes 50, 50 are attached will be explained.

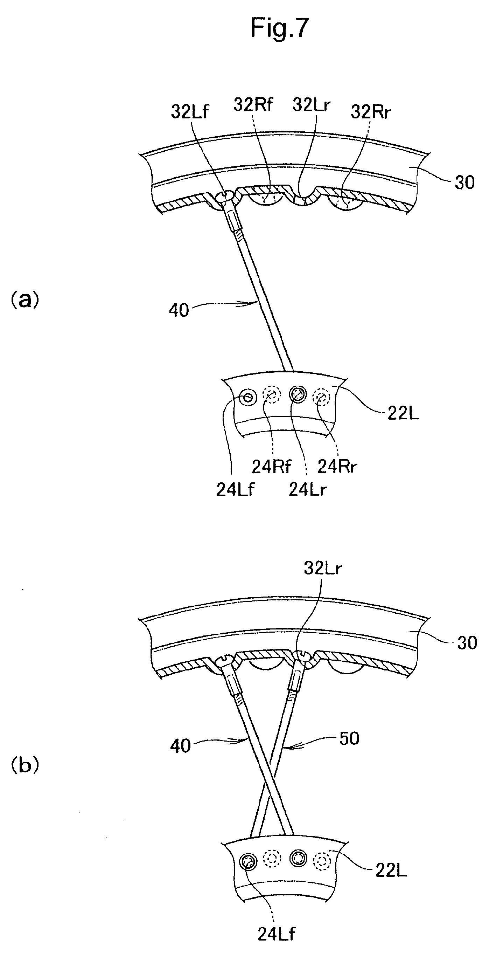

As shown in Fig. 7(a), the rim 30 has a front side left spoke connecting hole 32Lf (f is a suffix indicating the front), a front side right spoke connecting hole 32Rf, a rear side left spoke connecting hole 32Lr (r is a suffix indicating the rear), and a rear side right spoke connecting hole 32Rr arranged in this order in the direction of rotation in a side view of the vehicle.

In addition, the front side left spoke hole 24Lf and the rear side left spoke hole 24Lr are provided in this order in the direction of rotation on the left spoke fastening wall 22L.

One end of the short elbow spoke 40 is engaged with the rear side left spoke hole 24Lr, and the other end of the short elbow spoke 40 is connected to the front side left spoke connecting hole 32Lf.

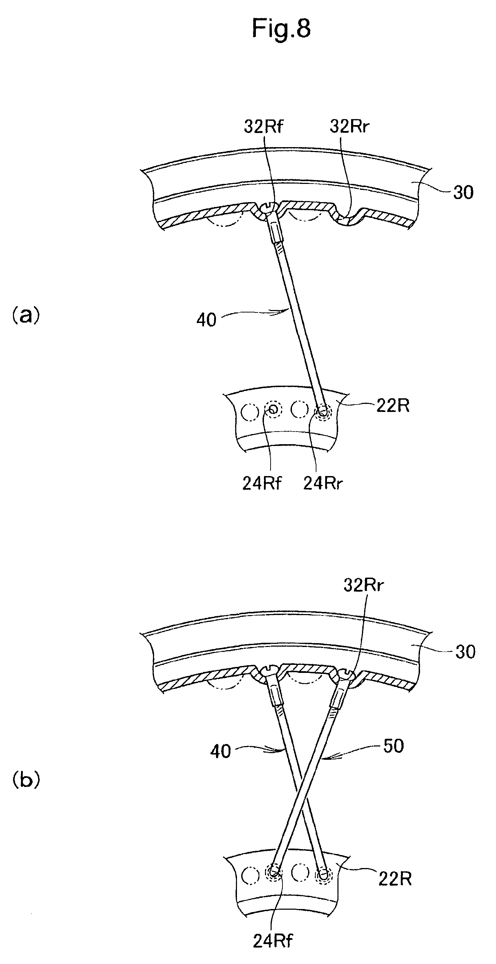

Further, the front side right spoke hole 24Rf on the right spoke fastening wall (denoted by the reference numeral 22R in Fig. 8(a) described later) is shifted by a half pitch so as to be located between the front side left spoke hole 24Lf and the rear side left spoke hole 24Lr when seen in side view as shown in Fig. 7. The rear side right spoke hole 24Rr is also shifted by a half pitch.

Next, as shown in Fig. 7(b), the one end of the long elbow spoke 50 is engaged with the front side left spoke hole 24Lf, and extends behind the short elbow spoke 40 (nearer the lateral centre of the vehicle). The other end of the long elbow spoke is connected to the rear side left spoke connecting hole 32Lr.

The one short elbow spoke 40 and the one long elbow spoke 50 can cross over in an x-shape and be attached between the left spoke fastening wall 22L and the rim 30 without interfering with each other.

In addition, as shown in Fig. 8(a), the one end of short elbow spoke 40 is engaged with the rear side right spoke hole 24Rr, and the other end of the short elbow spoke 40 is connected to the front side right spoke connecting hole 32Rf. Next, as shown in Fig. 8(b), the one end of the long elbow spoke 50 is engaged with the front side right spoke hole 24Rf, and the other end of the long elbow spoke 50 is connected to the rear side right spoke connecting hole 32Rr, and is shown in front of the short elbow spoke in side view in Fig. 8(b).

The one short elbow spoke 40 and the one long elbow spoke 50 can cross over in an x-shape and be attached between the right spoke fastening wall 22R and the rim 30 without interfering with each other.

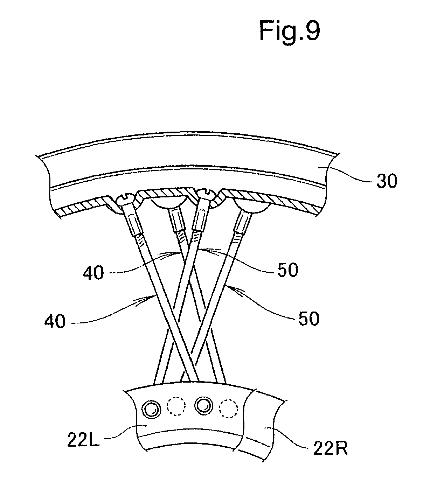

Fig. 9 is a drawing overlapping Fig. 7(b) with Fig. 8(b). In this drawing, a set composed of four spokes includes the two short elbow spokes 40, 40 and the two long elbow spokes 50, 50. One of the two short elbow spokes 40, 40 and one of the two long elbow spokes 50, 50 are fastened to the left spoke fastening wall 22L. The other short elbow spoke 40 and the other long elbow spoke 50 are fastened to the right spoke fastening wall 22R.

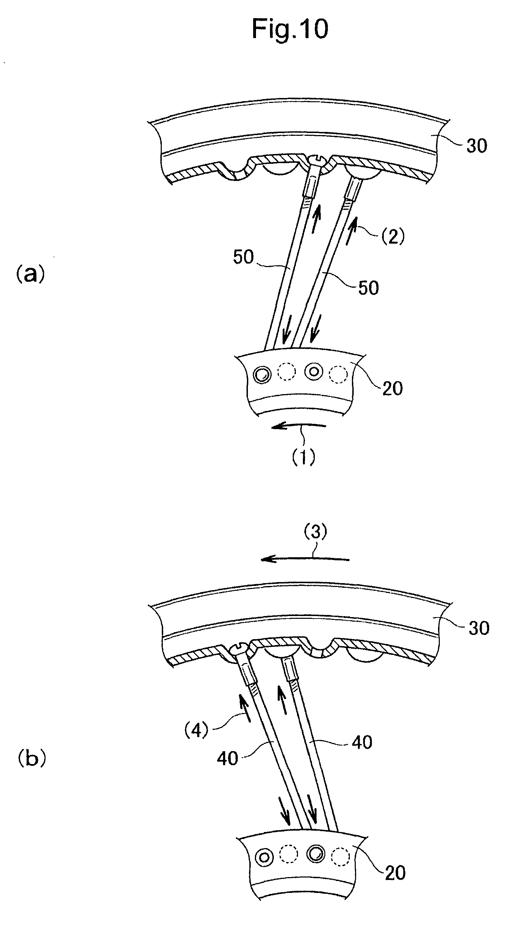

The long elbow spokes 50, 50 in Fig. 9 are shown by themselves in Fig. 10(a). The short elbow spokes 40, 40 in Fig. 9 are shown by themselves in Fig. 10(b).

As shown in Fig. 10(a), when starting and accelerating the vehicle, a driving force is applied to the hub 20 as shown by counterclockwise arrow (1) in the drawing. The driving force applies a tension, shown as arrows (2), to the long elbow spokes 50, 50.

Starting and accelerating the vehicle requires moderate operation for decreasing the fuel consumption and considering the environment. The tension shown in the arrows (2) thus remains equal to or below a fixed value.

A bending force is applied to the long elbow 52 of the long elbow spoke 50 shown in Fig. 4. As the tension shown in the arrows (2) is small, the bending force is not large, and so the long elbow spoke 50 may be used.

As shown in Fig. 10(b), when the brake is applied to the hub 20, a load shown by the arrow (3) is applied to the rim 30 by inertial action. There are different types of braking, such as moderate braking and sudden (emergency) braking. Although sudden braking occurs much less often, it must be taken into account. During sudden braking, a tension shown by arrow (4) becomes larger than the tension when accelerating.

A bending force is applied to the short elbow 42 of the short elbow spoke 40 shown in Fig. 3. As most of the short elbow 42 is housed in the left spoke hole 24L, the bending is smaller, and so a larger tension can be applied to the short elbow spoke 40 than the long elbow spoke 50.

From the above reasons, the wheel of the present invention is configured such that the tension when braking is applied to the short elbow spoke 40, as this spoke has a greater margin of strength, and the tension during normal driving is applied to the long elbow spoke 50. As a result, the strength of the long elbow spoke is less significant, and there is no need to thicken the long elbow spoke or to use expensive material.

Furthermore, the embodiment uses a short elbow spoke 40 and a long elbow spoke 50. However, three (or more than three) kinds of spokes may be used, by adding other spokes to the short elbow spoke 40 and the long elbow spoke 50.

Further, the right and left spoke fastening walls may be replaced by a single spoke fastening wall provided at the lateral centre of the hub.

Since the rear wheel is the driving wheel in a motorcycle, it is recommended that the spoke wheel of the present invention is used as the rear wheel of a motorcycle.

## Claims

1. A spoke wheel (10) comprising:
a hub (20) supported on a laterally extending wheel shaft (21) and on which a driving force and a braking force may be applied,
a rim (30) on which a tire (31) may be fitted, and
a plurality of spokes (40, 50) connecting the rim (30) to said hub (20),
**characterized in that**,
said spokes (40, 50) are of at least two kinds, including:
a short elbow spoke (40) including: a straight line portion (41); a short elbow (42) formed by bending the one end of the straight line portion (41); and a head (43) formed on the tip of the short elbow (42); and
a long elbow spoke (50) including: a straight line portion (51); a long elbow (52) formed by bending the one end of the straight line portion (51), which is longer than said short elbow (42) in order to avoid interfering with the short elbow spoke (40); and a head (53) formed on the tip of the long elbow (52);
spoke fastening walls (22L, 22R) with a plurality of spoke holes (24L, 24R) are provided on said hub (20) for engaging said short elbow (42) and said long elbow (52),
said short elbow (42) and said long elbow (52) are engaged with adjacent said spoke holes (24L, 24R) in a side view of the vehicle, simultaneously, said short elbow spoke (40) and said long elbow spoke (50) being arranged so as to cross in a side view of the vehicle, and
said short elbow spoke (40) and said long elbow spoke (50) are respectively disposed such that said short elbow spoke (40) receives the braking force and said long elbow spoke (50) receives the driving force.

2. The spoke wheel according to claim 1 **characterized in that**,
said hub (20) has a left spoke fastening wall (22L) and a right spoke fastening wall (22R) which are laterally spaced apart,
said rim (30) has a left spoke connecting hole (32L) and a right spoke connecting hole (32R) which are laterally spaced apart,
said spokes (40, 50) extending from said left spoke fastening wall (22L) are engaged with said left spoke connecting hole (32L),
and said spokes (40, 50) extending from said right spoke fastening wall (22R) are engaged with said right spoke connecting hole (32R).

3. The spoke wheel according to claim 2 **characterized in that**,
a set composed of four spokes includes two said short elbow spokes (40, 40) and two said long elbow spokes (50, 50),
a plurality of said sets are disposed between said hub (20) and said rim (30) in the circumferential direction,
one of said two short elbow spokes (40, 40) and one of said two long elbow spokes (50, 50) are fastened to said left spoke fastening wall (22L), and
the other of said two short elbow spokes (40, 40) and the other of said two long elbow spokes (50, 50) are fastened to said right spoke fastening wall (22R).

4. The spoke wheel according to claim 3 **characterized in that**,
said rim (30) has a front side left spoke connecting hole (32Lf), a front side right spoke connecting hole (32Rf), a rear side left spoke connecting hole (32Lr), a rear side right spoke connecting hole (32Rr) in this order in the direction of rotation in a side view of the vehicle,
a front side left spoke hole (24Lf) and a rear side left spoke hole (24Lr) are provided in this order in the direction of rotation on said left spoke fastening wall (22L),
a front side right spoke hole (24Rf) and a rear side right spoke hole (24Rr) are provided in this order in the direction of rotation on said right spoke fastening wall (22R), and said front side right spoke hole (24Rf) is shifted by a half pitch so as to be located midway between said front side left spoke hole (24Lf) and said rear side left spoke hole (24Lr),
the one end of one of said two long elbow spokes (50) is engaged with said front side left spoke hole (24Lf), the other end of the one of said two long elbow spokes (50) is connected to said rear side left spoke connecting hole (32Lr),
the one end of the other of said two long elbow spokes (50) is engaged with said front side right spoke hole (24Rf), the other end of the other of said two long elbow spokes (50) is connected to said rear side right spoke connecting hole (32Rr),
the one end of one of said two short elbow spokes (40) is engaged with said rear side left spoke hole (24Lr), the other end of the one of said short elbow spokes (40) is connected to said front side left spoke connecting hole (32Lf), and
the one end of the other of said two short elbow spokes (40) is engaged with said rear side right spoke hole (24Rr), the other end of the other of said two short elbow spokes (40) is connected to said front side right spoke connecting hole (32Rf).

5. The spoke wheel according to any preceding claim, **characterized in that**,
the straight line portion (41) of said short elbow spoke (40) and the straight line portion (51) of said long elbow spoke (50) have the same cross-sectional area.

6. The spoke wheel according to any preceding claim, **characterized in that**,
said short elbow spoke (40) and said long elbow spoke (50) are made of the same material.

## Patentansprüche

1. Ein Speichenrad (10), aufweisend:
Eine Nabe (20), die auf einer sich lateral erstreckenden Radwelle (21) gelagert ist und auf die eine Antriebskraft und eine Bremskraft ausgeübt werden kann,
eine Felge (30) auf die ein Reifen (31) gepasst werden kann, und
eine Mehrzahl von Speichen (40, 50), welche die Felge (30) mit der genannten Nabe (20) verbinden,
**dadurch gekennzeichnet, dass**:
Die genannten Speichen (40, 50) von mindestens zwei Arten sind, einschließlich:
Einer Speiche mit kurzem Ellenbogen (40), umfassend: Einen geradlinigen Abschnitt (41); einen kurzen Ellenbogen (42), der durch Biegen des einen Endes des geradlinigen Abschnitts (41) geformt ist; und einen Kopf (43), der auf der Spitze des kurzen Ellenbogens (42) geformt ist; und
einer Speiche mit langem Ellenbogen (50), umfassend: Einen geradlinigen Abschnitt (51); einen langen Ellenbogen (52), der durch Biegen des einen Endes des geradlinigen Abschnitts (51) geformt ist und der länger ist als der genannte kurze Ellenbogen (42), um ein in die Quere kommen mit der Speiche mit kurzem Ellenbogen (40) zu vermeiden, und einen Kopf (53), der auf der Spitze des langen Ellenbogens (52) geformt ist;
Speichenbefestigungswände (22L, 22R) mit einer Mehrzahl von Speichenlöchern (24L, 24R) auf der genannten Nabe (20) für den Eingriff des genannten kurzen Ellenbogens (42) und des genannten langen Ellenbogens (52) bereitgestellt sind,
der genannte kurze Ellenbogen (42) und der genannte lange Ellenbogen (52) in einer Seitenansicht des Fahrzeugs simultan im Eingriff mit benachbarten genannten Speichenlöchern (24L, 24R) sind, wobei die genannte Speiche mit kurzem Ellenbogen (40) und die genannte Speiche mit langem Ellenbogen (50) derart angeordnet sind, dass sie sich in einer Seitenansicht des Fahrzeugs kreuzen, und
die genannte Speiche mit kurzem Ellenbogen (40) und die genannte Speiche mit langem Ellenbogen (50) entsprechend derart angeordnet sind, dass die genannte Speiche mit kurzem Ellenbogen (40) die Bremskraft aufnimmt und die genannte Speiche mit langem Ellenbogen (50) die Antriebskraft aufnimmt.

2. Das Speichenrad nach Anspruch 1, **dadurch gekennzeichnet, dass**:
Die genannte Nabe (20) eine linke Speichenbefestigungswand (22L) und eine rechte Speichenbefestigungswand (22R) hat, welche lateral beabstandet sind,
die genannte Felge (30) ein linkes Speichenverbindungsloch (32L) und ein rechtes Speichenverbindungsloch (32R) hat, welche lateral beabstandet sind,
die genannten Speichen (40, 50), die sich von der linken Speichenbefestigungswand (22L) her erstrecken, sich im Eingriff mit dem genannten linken Speichenverbindungsloch (32L) befinden,
und die genannten Speichen (40, 50), die sich von der rechten Speichenbefestigungswand (22R) her erstrecken, sich im Eingriff mit dem genannten rechten Speichenverbindungsloch (32R) befinden.

3. Das Speichenrad nach Anspruch 2, **dadurch gekennzeichnet, dass**:
Ein Satz, der sich aus vier Speichen zusammensetzt, zwei der genannten Speichen mit kurzem Ellenbogen (40, 40) und zwei der genannten Speichen mit langem Ellenbogen (50, 50) umfasst,
eine Mehrzahl der genannten Sätze zwischen der genannten Nabe (20) und der genannten Felge (30) in der umlaufenden Richtung angeordnet ist,
eine der genannten zwei Speichen mit kurzem Ellenbogen (40, 40) und eine der genannten zwei Speichen mit langem Ellenbogen (50, 50) an der genannten linken Speichenbefestigungswand (22L) befestigt sind, und
die andere der genannten zwei Speichen mit kurzem Ellenbogen (40, 40) und die andere der genannten zwei Speichen mit langem Ellenbogen (50, 50) an der genannten rechten Speichenbefestigungswand (22R) befestigt sind.

4. Das Speichenrad nach Anspruch 3, **dadurch gekennzeichnet, dass**:
Die genannte Felge (30) ein vorderseitiges linkes Speichenverbindungsloch (32Lf), ein vorderseitiges rechtes Speichenverbindungsloch (32Rf), ein rückseitiges linkes Speichenverbindungsloch (32Lr) und ein rückseitiges rechtes Speichenverbindungsloch (32Rr) in dieser Reihenfolge in der Rotationsrichtung in einer Seitenansicht des Fahrzeugs hat,
ein vorderseitiges linkes Speichenloch (24Lf) und ein rückseitiges linkes Speichenloch (24Lr) in dieser Reihenfolge in der Rotationsrichtung auf der genannten linken Speichenbefestigungswand (22L) bereitgestellt sind.
ein vorderseitiges rechtes Speichenloch (24Rf) und ein rückseitiges rechtes Speichenloch (24Rr) in dieser Reihenfolge in der Rotationsrichtung auf der genannten rechten Speichenbefestigungswand (22R) bereitgestellt sind und das genannte vorderseitige rechte Speichenloch (24Rf) derart um eine halbe Teilung versetzt ist, dass es sich auf halbem Weg zwischen dem genannten vorderseitigen linken Speichenloch (24Lf) und dem genannten rückseitigen linken Speichenloch (24Lr) befindet,
das eine Ende von einer der genannten zwei Speichen mit langem Ellenbogen (50) mit dem genannten vorderseitigen linken Speichenloch (24Lf) im Eingriff ist und das andere Ende der einen der genannten zwei Speichen mit langem Ellenbogen (50) mit dem genannten rückseitigen linken Speichenverbindungsloch (32Lr) verbunden ist,
das eine Ende der anderen der genannten zwei Speichen mit langem Ellenbogen (50) mit dem genannten vorderseitigen rechten Speichenloch (24Rf) im Eingriff ist und das andere Ende der anderen der genannten zwei Speichen mit langem Ellenbogen (50) mit dem genannten rückseitigen rechten Speichenverbindungsloch (32Rr) verbunden ist,
das eine Ende von einer der genannten zwei Speichen mit kurzem Ellenbogen (40) mit dem genannten rückseitigen linken Speichenloch (24Lr) im Eingriff ist und das andere Ende der einen der genannten Speichen mit kurzem Ellenbogen (40) mit dem genannten vorderseitigen linken Speichenverbindungsloch (32Lf) verbunden ist,
das andere Ende der anderen der genannten zwei Speichen mit kurzem Ellenbogen (40) mit dem genannten rückseitigen rechten Speichenloch (24Rr) im Eingriff ist und das andere Ende der anderen der genannten zwei Speichen mit kurzem Ellenbogen (40) mit dem genannten vorderseitigen rechten Speichenverbindungsloch (32Rf) verbunden ist.

5. Das Speichenrad nach einem der voranstehenden Ansprüche, **dadurch gekennzeichnet, dass** der geradlinige Abschnitt (41) der genannten Speiche mit kurzem Ellenbogen (40) und der geradlinige Abschnitt (51) der genannten Speiche mit langem Ellenbogen (50) dieselbe Querschnittsfläche haben.

6. Das Speichenrad nach einem der voranstehenden Ansprüche **dadurch gekennzeichnet, dass** die genannte Speiche mit kurzem Ellenbogen (40) und die genannte Speiche mit langem Ellenbogen (50) aus demselben Material hergestellt sind.

## Revendications

1. Roue à rayons (10) comprenant :
un moyeu (20) supporté sur un arbre de roue (21) s'étendant latéralement et sur lequel une force d'entraînement et une force de freinage peuvent être appliquées,
une jante (30) sur laquelle un pneu (31) peut être ajusté et
une pluralité de rayons (40, 50) raccordant la jante (30) audit moyeu (20),
**caractérisée en ce que** :
lesdits rayons (40, 50) sont au moins de deux types, à savoir :
un rayon à coude court (40) comprenant une partie en ligne droite (41) ; un coude court (42) formé en repliant la première extrémité de la partie en ligne droite (41) ; et une tête (43) formée sur la pointe du coude court (42) ; et
un rayon à coude long (50) comprenant une partie en ligne droite (51) ; un coude long (52) formé en repliant la première extrémité de la partie en ligne droite (51), qui est plus long que ledit coude court (42) afin d'éviter une interférence avec le rayon à coude court (40) ; et une tête (53) formée sur la pointe du coude long (52) ;
des parois de fixation de rayons (22L, 22R) avec une pluralité de trous (24L, 24R) destinés aux rayons sont prévues sur ledit moyeu (20) pour s'engager sur ledit coude court (42) et ledit coude long (52), ledit coude court (42) et ledit coude long (52) sont engagé dans lesdits trous de rayons adjacents (24L, 24R) en vue latérale du véhicule, simultanément, ledit rayon à coude court (40) et ledit rayon à coude long (50) étant aménagés de manière à se croiser dans une vue latérale du véhicule et
ledit rayon à coude court (40) et ledit rayon à coude long (50) sont respectivement disposés de sorte que ledit rayon à coude court (40) reçoive la force de freinage et que ledit rayon à coude long (50) reçoive la force d'entraînement.

2. Roue à rayons selon la revendication 1, **caractérisée en ce que** :
ledit moyeu (20) a une paroi de fixation de rayons de gauche (22L) et une paroi de fixation de rayons de droite (22R) qui sont espacées l'une de l'autre latéralement,
ladite jante (30) a un trou de raccordement de rayon de gauche (32L) et un trou de raccordement de rayon de droite (32R) qui sont espacés l'un de l'autre latéralement,
lesdits rayons (40, 50) s'étendant de ladite paroi de fixation de rayons de gauche (22L) sont engagés dans ledit trou de raccordement de rayon de gauche (32L), et
lesdits rayons (40, 50) s'étendant de ladite paroi de fixation de rayons de droite (22R) sont engagés dans ledit trou de raccordement de rayon de droite (32R).

3. Roue à rayons selon la revendication 2, **caractérisée en ce que** :
un ensemble composé de quatre rayons comprend deux dits rayons à coude court (40, 40) et deux dits rayons à coude long (50, 50),
une pluralité desdits ensembles sont disposés entre ledit moyeu (20) et ladite jante (30) dans la direction circonférentielle,
l'un desdits deux rayons à coude court (40, 40) et l'un desdits deux rayons à coude long (50, 50) sont fixés à ladite paroi de fixation de rayons de gauche (22L) et
l'autre desdits deux rayons à coude court (40, 40) et l'autre desdits deux rayons à coude long (50, 50) sont fixés à ladite paroi de fixation de rayons de droite (22R).

4. Roue à rayons selon la revendication 3, **caractérisée en ce que** :
ladite jante (30) présente un trou de raccordement de rayon de gauche côté avant (32Lf), un trou de raccordement de rayon de droite côté avant (32Rf), un trou de raccordement de rayon de gauche côté arrière (32Lr), un trou de raccordement de rayon de droite côté arrière (32Rr) dans cet ordre dans le sens de rotation en vue latérale du véhicule,
un trou de rayon de gauche côté avant (24Lf) et un trou de rayon de gauche côté arrière (24Lr) sont ménagés dans cet ordre dans le sens de rotation sur ladite paroi de fixation de rayons de gauche (22L),
un trou de rayon de droite côté avant (24Rf) et un trou de rayon de droite côté arrière (24Rr) sont prévus dans cet ordre dans le sens de rotation sur ladite paroi de fixation de rayons de droite et ledit trou de rayon de droite côté avant (24Rf) est décalé d'un demi-pas de manière à être situé à mi-chemin entre ledit trou de rayon de gauche côté avant (24Lf) et ledit trou de rayon de gauche côté arrière (24Lr),
la première extrémité de l'un desdits deux rayons à coude long (50) est engagée dans ledit trou de rayon de gauche côté avant (24Lf) tandis que l'autre extrémité de l'un desdits deux rayons à coude long (50) est raccordée audit trou de raccordement de rayon de gauche côté arrière (32Lr),
la première extrémité de l'autre desdits deux rayons à coude long (50) est engagée dans ledit trou de rayon de droite côté avant (24Rf) tandis que l'autre extrémité de l'autre desdits deux rayons à coude long (50) est raccordée audit trou de raccordement de rayon de droite côté arrière (32Rr),
la première extrémité desdits deux rayons à coude court (40) est engagée dans ledit trou de rayon de gauche côté arrière (24Lr) tandis que l'autre extrémité de l'un desdits rayons à coude court (40) est raccordée audit trou de raccordement de rayon de gauche côté avant (32Lf) et
la première extrémité de l'autre desdits deux rayons à coude court (40) est engagée dans ledit trou de rayon de droite côté arrière (24Rr) tandis que l'autre extrémité de l'autre desdits deux rayons à coude court (40) est raccordée audit trou de raccordement de rayon de droite côté avant (32Rf).

5. Roue à rayons selon l'une quelconque des revendications précédentes, **caractérisée en ce que** :
la partie en ligne droite (41) dudit rayon à coude court (40) et la partie en ligne droite (51) dudit rayon à coude long (50) ont la même surface en coupe transversale.

6. Roue à rayons selon l'une quelconque des revendications précédentes, **caractérisée en ce que** :
ledit rayon à coude court (40) et ledit rayon à coude long (50) sont constitués du même matériau.
